# EUROPEAN PATENT APPLICATION

(11) **EP 2 857 656 A1**
(43) Date of publication of application: **08.04.2015**
(21) Application number: 13186799.6
(22) Date of filing: 01.10.2013
(51) Int. Cl.: F02C 6/08, F02C 9/52, F02C 7/18, F02C 9/18

(54) **Gas turbine with cooling air cooling system and method for operation of a gas turbine at low part load**

(71) Applicant: ALSTOM Technology Ltd, 5400 Baden (CH)
(72) Inventor: Knapp, Klaus, 5412 Gebenstorf (CH); Doebbeling, Klaus, 5210 Windisch (CH)

(57) **Abstract**

Gas turbine (10) and method for operating a gas turbine (10), comprising a compressor (1), a combustor (2), a turbine (3) and a cooling air cooling system having at least a first cooling air line (4) going from a first bleed of the compressor (1) to the turbine (3), and at least one second cooling air line (5) at a downstream position of the compressor (1) relative to the first cooling air line (4), whereby a heat exchanger (7) is arranged in the second cooling air line (5) for cooling the extracted air of higher pressure, and the heat exchanger (7) is connected with an air inlet side of the compressor (1) such that heat is transferred in order to heat up the inlet air of the compressor (1).

## Description

The present invention relates to a gas turbine with a cooling air cooling system, and to a method for the operation of such a gas turbine, in particular at low part load. The invention relates in particular to such a gas turbine having a cooling air cooling system with air extraction at the compressor side at a bleed downstream of a first bleed such that cooling air at different pressure levels is extracted for the purpose of a cooling of turbine parts.

Parallel to the requirements regarding the performance and efficiency of such gas turbines, the requirements are more and more increasing as regards the cooling of highly stressed machine components on the one side and the design and dimensioning of the cooling system on the other side. It is required in view of the operation security that a sufficient cooling in all possible conditions of operation of the gas turbine is guaranteed. This is in particular true for gas turbines, which are run at a low part load during periods of low electricity demand.

Basically, gas turbines and gas turbine combined cycles are considered as very flexible in load. They are fast in load following as well as in the case of a start-up. However, if the current gas turbines are operated in particular at a very low part load, there are problems as regards the environment compliance and in view of the sufficient cooling of turbine parts and a stable combustion in the combustor. When such gas turbines are operated at a very low part load with the variable inlet guide vanes closed or almost closed, the hot gas temperature drops, and premixed combustion stability is therefore limited. Furthermore, in such situations the supply of a sufficient pressure for the turbine cooling air drops as well, and the cooling air flow from the cooling system to the turbine might drop below the allowable lower limit. In the prior art, gas turbines with a cooling system have been known, which comprise different bleeds at the compressor at different pressure levels in order to supply a sufficient mass flow of cooling air to the turbine parts. The cooling air from the further downstream bleed of such cooling systems is higher in pressure and temperature, which is why the temperature has to be reduced in order to provide a sufficient cooling of the cooling system. For this purpose, a cooling system has been suggested in the prior art, in which a second cooling air line downstream of a first cooling air line is arranged, and in which the air taken from the second cooling air line is cooled down before an introduction into the turbine.

A further problem of such gas turbines operated in a range of low part load is the fact that, upon a fast change of the load in times of transition, the compressor casings and the vane carriers are shrinking faster than the rotor blades of the compressor do. Due to this difference in the thermal deformation of compressor components, the tip clearances of compressor blades or vanes get smaller than in a stationary part load operation, which might either lead to a contact of these parts or might require higher steady-state clearances, which is detrimental to the compressor efficiency.

In view of the above issues, it is an object of the present invention to provide a gas turbine as well as a method for operating a gas turbine at very low loads with an improved cooling efficiency of the cooling system and in an environmentally compatible way. A further object of the present invention is to provide such a gas turbine with the possibility of a flexible and wide-range load operation mode avoiding a deterioration of parts or elements of the compressor in times of transition.

This problem is solved by a gas turbine having the features of claim 1, as well as by a method for operating a gas turbine with the steps according to claim 11. Preferred embodiments and further developments of the invention are defined in the dependent claims.

The gas turbine according to the present invention comprises a compressor, a combustor, a turbine and a cooling air cooling system having at least a first cooling air line going from a first bleed of the compressor to the turbine, and at least a second cooling air line at a downstream position of the compressor relative to the first cooling air line, whereby it is characterized in that a heat exchanger is arranged in the second cooling air line for cooling the extracted air of higher pressure, and in that the heat exchanger is connected with an air inlet side of the compressor such that heat is transferred in order to heat up the inlet air of the compressor. By means of these measures, the temperature of the cooling air is sufficiently low also in a low part load operation of the gas turbine, since the heat from the air in the second cooling air line is removed by means of the heat exchanger. The heat removed from the cooling air is according to the present invention furthermore transferred to the inlet side of the compressor in order to heat up the inlet air or at least a fraction of inlet air, which guarantees a sufficiently high temperature of gases in the combustion chamber. The gas turbine according to the invention does therefore not only provide a more efficient cooling air cooling system, but reduces also problems regarding the stable combustion of the gas turbine in a low part load regime. It is hereby possible to run the gas turbine also at very low loads, in particular at loads of 15 percent stable load or even below and at the same time with very low NOx and CO emissions.

The second cooling air line can for example be connected to a second bleed downstream of the first bleed or for example connected to a compressor plenum downstream of the compressor. In case of a compressor with intercooling the bleeds can also be arranged in lines to or from the intercooler.

The heat from the heat exchanger in the second cooling air line is directly or indirectly transferred to the inlet side of the compressor and is efficiently used for the purpose of a preheating of inlet air. It is therefore not necessary (but additionally possible) to provide an extra preheater system for heating up the inlet air of the gas turbine. The heat exchanger and the connecting line to the inlet side of the compressor are according to an advantageous aspect of the invention realized in an integrated form, so that the construction of the gas turbine is compact. The heat exchanger may have a form of different types of heat exchangers, which are known to a person skilled in the art. The invention provides a gas turbine, which allows at the same time an increase in the compressor exit temperature, combustor hot gas temperature and cooling air supply pressure with a comparatively simple construction and only a few additional necessary turbine parts. It is therefore possible to operate the gas turbine according to the present invention at a very low part load below the lowest possible part load of prior art turbines and in emission compliance with still a sufficient turbine cooling air supply.

According to an advantageous aspect of the present invention, the heat exchanger of the second cooling air line is connected to a preheater system for transferring the heat from the second cooling air line to the inlet air in the preheater system. With the heat transfer to the preheater of the gas turbine, the inlet air is sufficiently high in temperature, even in a low load operation of the gas turbine. Furthermore, the energy consumption of the preheater is reduced. Also in case that the heat transferred from the heat exchanger is not sufficient for a stable combustion, the operation of the gas turbine is still possible due to the additional heat provided by the preheater system of the gas turbine.

According to a further advantageous aspect of the present invention, the preheater system comprises an electrical heater or is run by an external heat source. The preheater system may, for example, be arranged at an air intake prior to an air filter of the air intake and may have a heat cycle with a heating medium and appropriate heat exchangers and a pump. The transfer of the heat from the heat exchanger of the second cooling air line to the heating cycle of the preheater system may have the form of simple connection lines or may be realized with further additional heat exchangers. For a person skilled in the art, different possibilities of a realization of such a heat transfer are known.

According to a further advantageous aspect of the invention, the gas turbine has an air intake and an air distribution device downstream of the air intake and is characterized in that an air extraction line between the air intake and the distribution device is given, which is provided with heat exchange means for transferring heat from the heat exchanger to the inlet air of the compressor. Hereby, only a part of the inlet air, which is flowing through the air extraction line to the air distribution device, may be heated by means of the heat derived from the heat exchanger at the compressor side. The air extraction line is connected to the air intake preferably after an air intake filter, and, according to an advantageous aspect of the invention, a blower is arranged in the air extraction line such that the heated fraction of inlet air is directly guided to the air distribution device. The air distribution device is arranged downstream of the air intake, i.e. between the air intake and the inlet side of the compressor. The air distribution device makes it possible to introduce the heated fraction of inlet air in a specifically defined manner into the bell-mouth of the compressor, so that different temperature profiles with inlet air streams of different temperatures may be realized. In an alternative form of realization concerning this embodiment, the air in the air extraction line from the air intake is extracted by means of a turbo-charger instead of a blower, and the turbo-charger is driven by the flow of bleed air of the second cooling line. The turbo-charger is installed instead of a blower, so that the extracted heated air is guided to the air distribution device of the gas turbine. The turbo-charger reduces the temperature and the pressure of the air from the second bleed or the second cooling air line, so that sufficient low temperature cooling air is supplied to the parts of the turbine to be cooled, while guaranteeing at the same time a sufficiently high temperature of gas in the combustion chamber.

According to a further advantageous aspect of the invention, a mixing device for mixing cooling air of both cooling air lines prior to be introduced into the turbine is provided. By changing the amount of cooling air from the first cooling air line and the second cooling air line, the appropriate cooling temperature may easily be controlled depending on the state of operation of the gas turbine. In addition, the mixing device can be used for mixing furthermore ambient air to the cooling air of the two cooling air lines depending on the level of the outside temperature.

According to a further advantageous aspect of the invention, an annular air distribution device is arranged at the inlet side of the compressor, in which the inlet air heated by means of a heat transfer from the second cooling air line or from other heat sources is introduced to a compressor bell-mouth through multiple nozzles in the form of an annular air film. By means of this, a specific, desired radial temperature profile of inlet air at the inlet side of the compressor may be formed: the warmer inlet air is in particular guided by means of the air distribution device to the radial outer side of the compressor, whereas the colder intake air is in an annular layer at the inside of the compressor. Hence, a homogeneous circumferential distribution of different temperature inlet air can be obtained, in which a specific radial temperature profile is given (warmer inlet air outside). This has the advantage that during fast changes of the load of the gas turbine in times of transitions, which leads to a different retraction of the compressor casing and the inner parts of the compressor, the tip clearances of rotor blades can be better controlled such that in any case a sufficient clearance between these parts of the compressor is given, and the compressor will not be damaged or the compressor does not have to be built with larger clearances between the respective compressor parts. In particular, a contact and a deterioration of the compressor vanes are hereby avoided. The warmer inlet air is injected by the air distribution device homogeneously at the circumference at the inner radius of the compressor casing generating a radial temperature profile that is used to increase the compressor tip clearance during transient operation, i.e. for avoiding different detrimental deformations of compressor parts during the loading or deloading of the gas turbine.

According to a further advantageous aspect of the invention, the annular air distribution device is adapted for generating an annular outer film of a warmer inlet air than an inner part of inlet air coming directly from the air intake. The air distribution device of the gas turbine according to the invention may have multiple nozzles or air jets arranged on the circumference of the compressor bell-mouth at equal distances to one another. Hereby, a kind of temperature profile with different temperatures in the inner side compared to the outer side is generated within the compressor through the inlet air of different temperatures. A person skilled in the art is able to realize such a specific radial temperature profile within a compressor. This part of the present disclosure regarding the air distribution device as defined also in claims 8, 9 and 10 of the appended claims may also be used separately with other forms and types of gas turbines or other types of turbines as such. The present disclosure is therefore not limited to only a use of this type of annular air distribution device of a compressor in combination with the gas turbine as defined in the claims.

The invention relates also to a method for operating a gas turbine as defined in claim 11. The gas turbine, which is operated through the method according to the invention, comprises a compressor, a combustor, a turbine and a cooling air cooling system having at least a first cooling air line going from the first bleed of the compressor to the turbine and at least one second cooling air line at a downstream position of the compressor relative to the first cooling air line, in which a heat exchanger is arranged for cooling the extracted air of higher pressure, and is characterized by transferring heat from said heat exchanger to the compressor inlet air or at least a fraction of the inlet air. The heat extracted from the cooling air cooling system for reducing the temperature of the air in the second bleed of the compressor is used according to the invention for heating the inlet air or a part of the inlet air in an upstream position of the compressor. A sufficiently high temperature of gases in the combustion chamber for a stable combustion is hereby achieved also in situations of an operation of the gas turbine in a very low part load, e.g. a load of only 15 percent or below the nominal load of the gas turbine. This operation method is also efficient with regard to environmental compliances, i.e. it leads to low NOx and low CO emissions. Nevertheless, the method according to the invention provides in all operation situations of the gas turbine a sufficient supply of cooling air at a sufficient pressure and temperature.

According to an advantageous aspect of the method of the invention, the heat is transferred to a preheater system for heating up the entire intake air of said compressor. The preheater system may have an electrical heater or may be operated by means of an external heat source. With the additional heat transferred from the cooling air cooling system, the inlet air is heated in a faster manner and at a lower energy consumption. In an hereto alternative form of realization of the method according to the invention, the heat from the second cooling air line of the cooling system is transferred to an inlet air extracted from an air intake for heating up a portion of intake air prior to a compressor inlet. By means of this, it is possible to better control the temperature of the inlet air and/or to realize different forms of temperature profiles of the inlet air at the bell-mouth of the inlet side of the compressor.

According to a further advantageous aspect of the invention, the method is characterized by mixing cooling air from said first cooling air line and said second cooling air line of the air cooling cooling system upstream of said turbine. A more flexible control of the temperature of the cooling air is thereby possible. Furthermore, the mixing can also be combined with a mixing of outside air, depending on the temperature of the outside air in different situations of use of the gas turbine.

According to a further advantageous aspect of the method according to the invention, the method is characterized by generating a hot air film at an outer circumferential side of a compressor bell-mouth, which is warmer than an inner part of inlet air coming (directly) from the air intake. By means of this, a compressor clearance control is realized, avoiding any damages to the inner parts of the compressor due to different durations of shrinking, for example. If the casing of the compressor is subjected to a warmer air film, the necessary clearances to the compressor vanes can be maintained even in case of fast transitions between a full load and a part load operation of the gas turbine and vice versa. This part of the present disclosure may also be used for other gas turbines or turbines not described in the present application.

According to a further advantageous aspect of the invention, the method is characterized by operating the gas turbine at a low part load and by controlling a cooling air supply pressure of the cooling air cooling system to at least a preset minimum threshold value. With this operation mode, the turbine can be operated at a very low part load in case of low energy requests while still maintaining a long lifetime of the gas turbine, since the minimum threshold value for the supply pressure of cooling air is maintained in any situation.

In the following, the invention of the present application will be described in more detail by means of several embodiments of the invention and with reference to the attached drawings, in which:
- Fig. 1: is a schematic view of a first embodiment of the gas turbine according to the present invention with a preheater system;
- Fig. 2: is a schematic view of a second embodiment of the gas turbine according to the present invention with an air extraction from the air intake and an air distribution device;
- Fig. 3: is a schematic view of a third embodiment of the gas turbine according to the present invention with an air extraction from the air intake and a turbo-charger; and
- Fig. 4: is a schematic cross-section view of an annular air distribution device at the inlet side of a compressor of a further embodiment of a gas turbine according to the present invention.

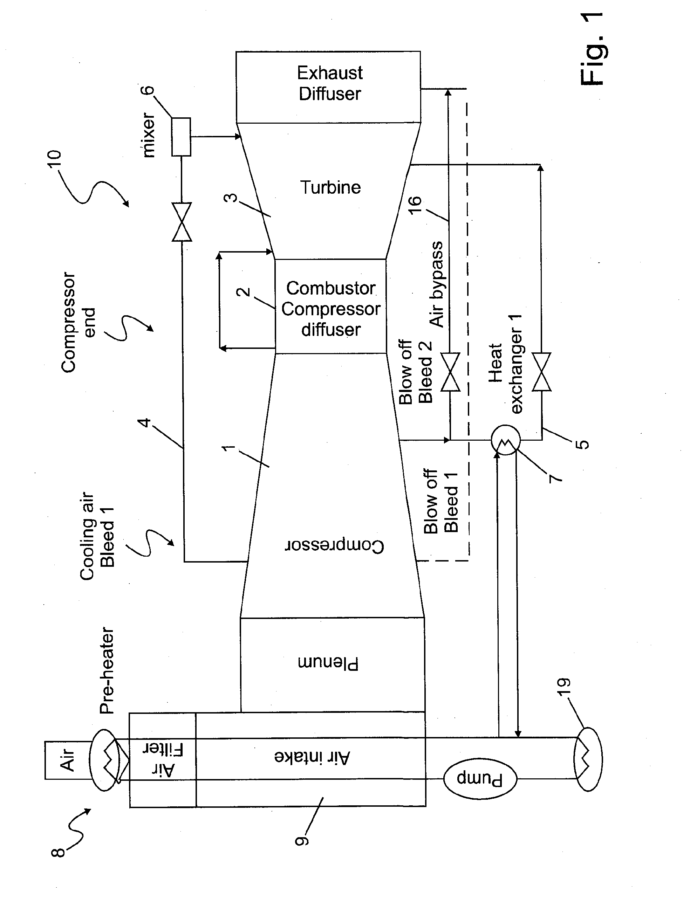

Figure 1 shows in a schematic view a first embodiment of the gas turbine according to the invention, having a cooling air cooling system as well as a preheater system 8 for the inlet air to a compressor 1. The gas turbine 10 basically comprises a compressor 1, a combustor 2 and a turbine 3. The gas turbine 10 is in this embodiment furthermore provided with a preheater system 8 upstream of an air intake 9, with which the inlet air to the compressor 1 is heated in particular in a part load operation modus of the gas turbine 10. The cooling air cooling system of this gas turbine 10 is especially adapted for a part load operation having at least a first cooling air line 4 or cooling air bleed at a first pressure level of the compressor 1, and at least one second cooling air line 5 at a downstream position of the compressor 1 relative to the first cooling air line 4, i.e. for cooling air of initially higher temperature and pressure. The cooling air from the cooling air cooling system flows to the turbine 3 in order to cool respective parts of the turbine 3. The two flows of cooling air from the cooling air lines 4, 5 may be controlled separately or may be mixed in a mixing device 6 in order to provide a sufficient temperature level of the cooling air for the turbine 3.

According to the present invention, the second cooling air line 5 of the cooling air cooling system is here provided with a heat exchanger 7 or heat exchange means in order to cool this cooling air of higher pressure and temperature before entering into the turbine 3. The heat exchanger 4 is thermally connected to the preheater system 8, so that heat from the heat exchanger 7 is transferred to the inlet side of the gas turbine 10 in order to support the heating by means of the preheater system 8. When the gas turbine 10 is operated at a low part load, air is extracted from the compressor 1 via the second cooling air cooling line 5, and the heat from the heat exchanger 7 is directly or indirectly transferred to the preheater system 8, e.g. by a heat exchanger running for instance with thermal oil or any appropriate fluid, or in direct heat exchange. By means of this heat from the heat exchanger 7, the entire intake air from the air intake 9 is heated in particular in a part load operation of the gas turbine 10, so that sufficiently high temperatures at the compressor exit are achieved for a stable combustion in the combustor 2 of the gas turbine 10. At the same time, a sufficient pressure of cooling air of the cooling air cooling system is given due to the cooling-down of the cooling air in the second cooling air line 5 by means of the heat exchanger 7 connected with the preheater system 8.

As a means for heating the intake air at the preheater system 8, there may be provided an electrical heater 19 or, alternatively, an external heat source may be used. The preheater system 8 comprises furthermore a pump and appropriate connection lines in order to enable an efficient heat transfer from the heat exchanger 7 of the cooling air cooling system of the compressor 1. The cooling air lines 4 and 5 and possible further cooling air lines or bleeds are provided with respective control valves and a control means (not shown in Fig. 1), by means of which the temperature of the cooling air is controlled before entering into the turbine 3. Also, a mixing device 6 is provided for this purpose, in which the cooling air from the two cooling air lines 4, 5 may be mixed with or without additional ambient air or air, which is not cooled by the cooling air cooling system of this gas turbine 10. Furthermore, there is provided an air bypass 16 in the cooling air line 5 for situations, in which the gas turbine 10 is not run in a part load, so that the cooling air from the second cooling air line 5 or cooling air bleed is not needed.

With the gas turbine 10 according to the present invention, an environmentally compliant operation with low NOx and CO emissions is achieved with at the same time a sufficient pressure of the secondary air flow cooling air due to the combination of the cooling air cooling system and the heat transfer to the preheater system 8 as described with reference to Fig. 1. It is thereby avoided that during a low load of the gas turbine the hot gas temperature drops below a lower limit, which would prevent a stable combustion in the combustor 2. The air from the compressor 1 is sufficiently high in temperature, and the cooling air from the cooling air cooling system is at a sufficiently high pressure level even if the gas turbine 10 is run at very low load, e.g. at a 15 percent load or even below in situations, in which the electricity demand is reduced. The gas turbine according to the present invention is therefore specifically adapted for a fast changing of load requirements of the consumers, as well as a changing supply from power generation sources, e.g. wind energy, such that electricity generation equals at all times the electricity consumption.

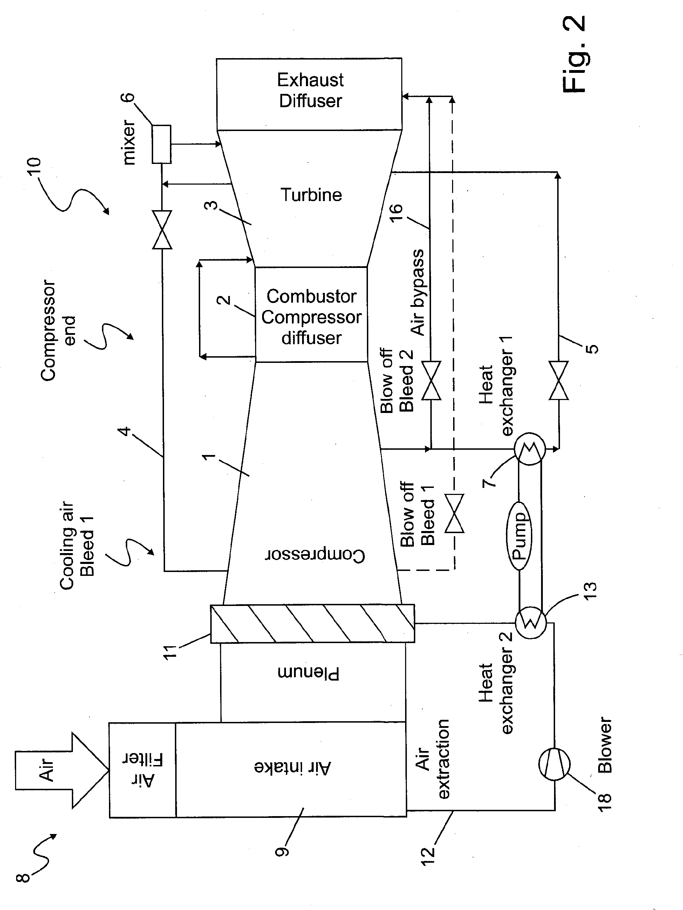

The schematic drawing of Fig. 2 shows a further example of realization of a gas turbine 10 of the present invention. Contrary to the above-described first embodiment of the invention, here the gas turbine 10 is not provided with a preheater system 8. The heat from the second cooling air line 5 of the cooling air cooling system is here transferred to an air extraction line 12, by means of which a part or a fraction of the air of the air intake 9 is extracted and is guided through a blower 18 to an air distribution device 11 at the inlet side of the compressor 1. The heat is transferred to the extracted air in the air extraction line 12 through an additional heat exchanger means 13 and a pump between the heat exchanger 7 and this heat exchanger means 13, so that an appropriate heat-exchanging fluid flows through the respective heat exchange circle between the inlet side of the compressor and the cooling air cooling system. Also in this second embodiment of a gas turbine 10 of the present invention, a sufficiently high temperature of the combustor gas is achieved at the same time with a sufficiently high pressure of cooling air from the cooling air cooling system in particular for a very low load operation of the gas turbine 10. Here, only a fraction of the compressor inlet air is heated, which is extracted from the air intake 9 after an air intake filter by means of the air extraction line 12. The other components and construction details of the gas turbine 10 of this second embodiment are similar to those of the above-described first embodiment with reference to Fig. 1 and will not be described again in detail.

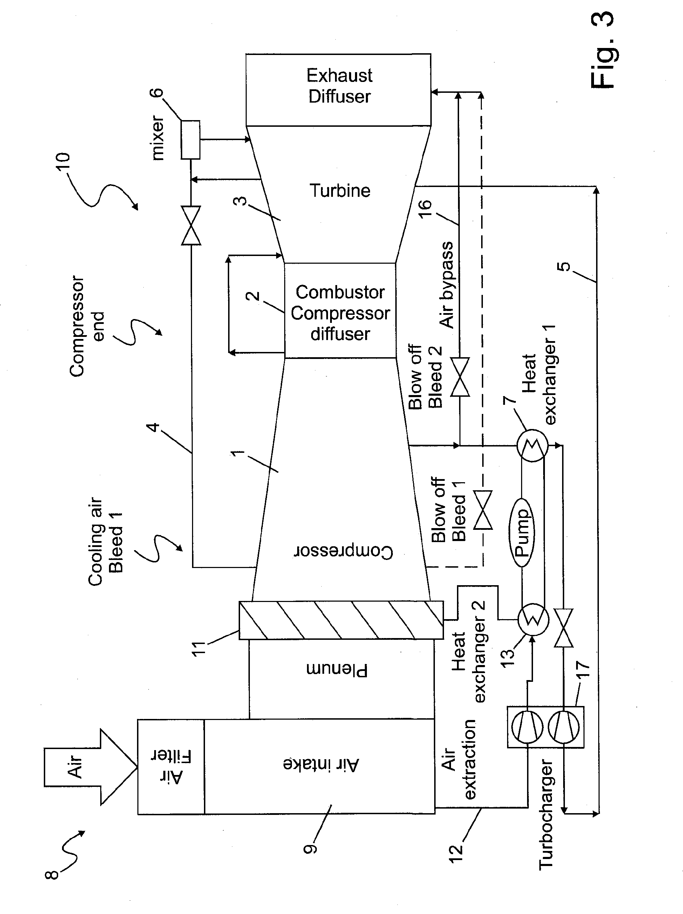

In Fig. 3, a third form of realization of a gas turbine 10 according to the invention of the present application is shown in a schematic drawing. The gas turbine 10 is here similar to the gas turbine 10 of the previous embodiment described with reference to Fig. 2, but instead of a blower 18 in the air extraction line 12, a turbo-charger 17 is used, which reduces the temperature and pressure of the air in the second cooling air line 2 to a level that is appropriate for the cooling of the turbine 3. Also here, only a fraction of the inlet air from the air intake 9 is extracted after an air filter by means of the air extraction line 12 and is guided by means of the turbo-charger 17 to an additional heat exchanger means 13, in which heat is introduced into the extracted air before it flows via the air distribution device 11 into the inlet of the compressor 1. For the heat transfer between the cooling air cooling system and the inlet side of the compressor 1, a heat cycle with a pump is provided with an appropriate heating cycle fluid between the heat exchanger 7 and the additional heat exchanger means 13. Also in case of this embodiment of a gas turbine 10 according to the third embodiment of the invention, an efficient operation of the gas turbine 10 at very low load can be achieved under respecting the increase in respect with environmental requirements regarding the emission of NOx and CO.

The combination of an additional cooling air line at a higher pressure bleeds of the compressor 1 and a heat transfer from the cooling air cooling system to the inlet air at the inlet side of the compressor 1 leads to a sufficiently high pressure of the cooling air at the side of the turbine 3 and at the same time enables a stable combustion due to the sufficiently high temperature of the air coming from the compressor 1. The above-described three embodiment of the present invention can certainly also be combined with one another and may have additional components not described here in detail. The embodiments according to Fig. 2 and Fig. 3 can also be combined with a gas turbine 10 having in addition a preheater system 8 as shown and described with reference to Fig. 1 of the drawings. The heat exchanger 7 and heat exchanger means 13 may have any appropriate form of heat exchanging means as known to a person skilled in the art. For the control of the operation of the gas turbine 10, the gas turbine 10 is furthermore provided with appropriate control means, with which the control valves in the cooling air lines 4, 5 and the air bypass 16 as well as the mixing device 6 may be controlled. Due to the additional heating of the inlet air by means of a specific heat transfer from the cooling air system of the compressor, the combustor hot gas temperature can be increased efficiently while maintaining a constant turbine outlet temperature, and as a consequence, a lower emission operation is possible in particular at a low part load of the gas turbine 10. In the above-described embodiments of Figs. 2 and 3, the heated extracted air of the air extraction line 12 is introduced into the compressor 1 via an air distribution device 11.

This air distribution device 11 may be an annular air distribution device having a plurality of circumferentially arranged nozzles or air jets, which are provided such that a hot air film in the compressor bell-mouth of the compressor 1 is generated. The annular air distribution device 11 is in particular of such a form that it is able to generate a radial temperature profile with higher temperatures towards the casing of the compressor 1 (outer part), which heats up this part faster than normally during loading or delays the temperature drop and hence a shrinking of the casing during deloading. With such a form of the design of the air distribution device 11, the invention furthermore reduces problems in view of the clearance control of the components of the compressor 1: during the transition of load of conventional gas turbines, the compressor casings (the vane carriers) are usually shrinking faster than the rotor does, in particular if the gas turbine is deloading to a very low part load, which leads to a reduction of tip clearances of the compressor blades or vanes compared to a stationary part load operation. In the case of the prior art gas turbines, this leads either to a contact or might require higher steady-state clearances, which is detrimental to the compressor efficiency. According to the new specific construction of an air inlet device 11, these problems are avoided: the outer part (compressor casing) is subjected to an inlet air stream of higher temperature than the radially inner parts of the compressor 1 at the same axial position. This part of the disclosure of the invention may also be used separately from the type of turbines described herein.

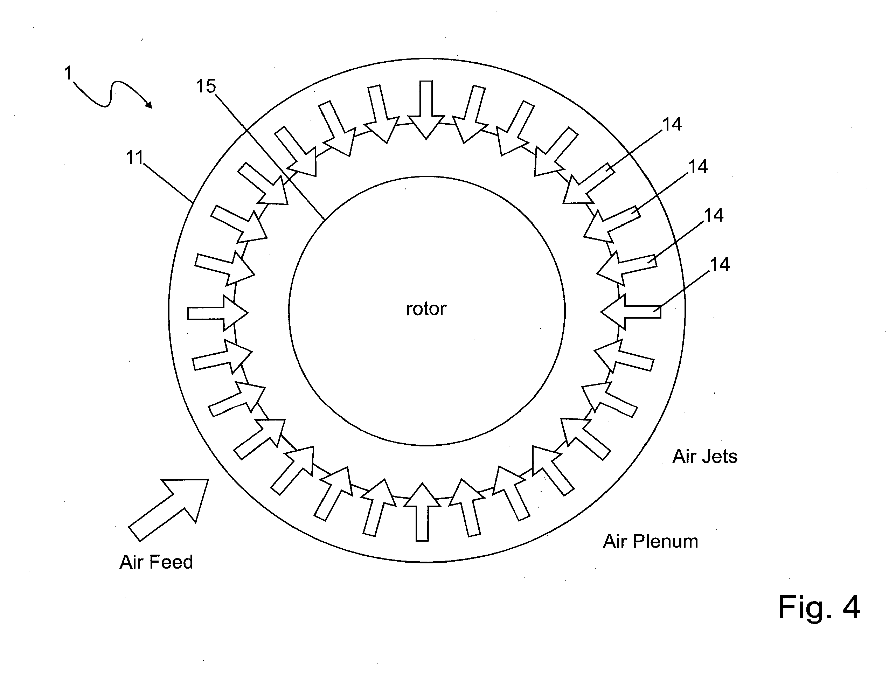

The schematic cross-section drawing of Fig. 4 shows an example of realization of such an annular air distribution device 11, which might be used in the form of the embodiments of the above-shown Figs. 2 and 3. It is to be noted that such an air distribution device 11 as shown in Fig. 4 is not limited according to the present disclosure to a use in combination with these forms of gas turbines 10 of Figs. 2 and 3, and may also be used in other types of gas turbines or turbines as such not shown in the present application. The annular air distribution device 11 at the inlet side of the compressor 1 has multiple radial nozzles 14 at the circumferential outer part of the compressor 1 surrounding an inner rotor of the compressor. The inlet air is fed by means of the nozzles 14 or air jets such that the inlet air forms at the bell-mouth of the compressor 1 a kind of two-layered air flow, which is homogeneous in the circumferential direction, but has a different temperature profile in the radial direction. The outer air flow is warmer than the inner layer of inlet air, which comes directly from the air intake 9 without an additional heating, due to the additional heating of the inlet air via the heat exchanger 13 in the air extraction line 12. The air jets or nozzles 14 of the annular air distribution device 11 are arranged at equal distances completely around the circumference of the casing of the compressor 1. A person skilled in the art knows how to generate different homogeneous air films in such an air film profile with different temperatures in radial direction. When using such an annular air distribution device 11 in a gas turbine 10 according to the present invention, a further advantage is achieved to support the compressor clearance control without the requirement of complex construction forms of the gas turbine 10. By means of this the efficiency of the gas turbine operation in particular at very low load is furthermore increased.

## Claims

1. Gas turbine (10) comprising a compressor (1), a combustor (2), a turbine (3) and a cooling air cooling system having at least a first cooling air line (4) going from a first bleed of the compressor (1) to the turbine (3), and at least one second cooling air line (5) at a downstream position of the compressor (1) relative to the first cooling air line (4), **characterized in that** a heat exchanger (7) is arranged in the second cooling air line (5) for cooling the extracted air of higher pressure, and **in that** the heat exchanger (7) is connected with an air inlet side of the compressor (1) such that heat is transferred in order to heat up the inlet air of the compressor (1).

2. Gas turbine (10) according to claim 1, **characterized in that** the heat exchanger (7) is connected to a preheater system (8) for transferring the heat from the second cooling air line (5).

3. Gas turbine (10) according to claim 1 or 2, **characterized in that** the preheater system (8) comprises an electrical heater (19) or is run by an external heat source.

4. Gas turbine (10) according to any one of the preceding claims having an air intake (9) and an air distribution device (11) downstream of the air intake (9), **characterized by** an air extraction line (12) between the air intake (9) and the distribution device (11) which is provided with heat exchange means (13) for transferring heat from the heat exchanger (7) to the inlet air of the compressor (1).

5. Gas turbine (10) according to claim 4, **characterized in that** a blower (18) is arranged in the air extraction line (12).

6. Gas turbine (10) according to claim 4, **characterized in that** air from the air intake (9) is extracted by means of a turbo charger (17) driven by the flow of bleed air of the second cooling air line (5).

7. Gas turbine (10) according to any one of the preceding claims, **characterized in that** a mixing device (6) for mixing cooling air of both cooling air lines (4, 5) prior to be introduced to the turbine (3) is provided.

8. Gas turbine (10) according to any one of the preceding claims, **characterized in that** an annular air distribution device (11) is arranged at the inlet side of the compressor (1) in which the inlet air heated by means of a heat transfer from the second cooling air line (7) is introduced to a compressor bell-mouth through multiple nozzles (14) in form of an annular air film.

9. Gas turbine (10) according to claim 8, **characterized in that** the annular air distribution device (11) is adapted for generating an annular outer film of warmer inlet air than an inner part of inlet air coming from the air intake (9).

10. Gas turbine (10) according to claim 8 or 9, **characterized in that** the air distribution device (11) has multiple nozzles (14) or air jets arranged on the circumference of the compressor bell-mouth at equal distances to one another.

11. Method for operating a gas turbine (10) comprising a compressor (1), a combustor (2), a turbine (3) and a cooling air cooling system having at least a first cooling air line (4) going from a first bleed of the compressor (1) to the turbine (3), and at least one second cooling air line (5) at a downstream position of the compressor (1) relative to the first cooling air line (4), in which a heat exchanger (7) is arranged for cooling the extracted air of higher pressure **characterized by** transferring heat from said heat exchanger (7) to the compressor inlet air.

12. Method according to claim 11, **characterized by** transferring said heat to a preheater system (8) for heating up the entire intake air of said compressor (1).

13. Method according to claim 11, **characterized by** transferring said heat to an inlet air extracted from an air intake (9) for heating up a portion of intake air prior to a compressor inlet.

14. Method according to any one of claims 11 to 13, **characterized by** mixing cooling air from said first cooling air line (4) and said second cooling air line (5) upstream of said turbine (3).

15. Method according to any one of claims 11 to 14, **characterized by** generating a hot air film at an outer circumferential side of a compressor bell-mouth which is warmer than an inner part of inlet air coming from the air intake (9).

16. Method according to any one of claims 11 to 15, **characterized by** operating the gas turbine (10) at a low part load and controlling a cooling air supply pressure of the cooling air cooling system to at least a preset minimum threshold value.
